# EUROPEAN PATENT APPLICATION

(11) **EP 4 497 627 A1**
(43) Date of publication of application: **29.01.2025**
(21) Application number: 24191059.5
(22) Date of filing: 26.07.2024
(51) Int. Cl.: B60N 2/18

(54) **SYSTEM FOR VERTICALLY ADJUSTING A SEAT OF A VEHICLE, IN PARTICULAR A MOTOR VEHICLE**

(30) Priority: 28.07.2023 IT 202300016005
(71) Applicant: Proma S.p.A., 81020 San Nicola La Strada (CE) (IT)
(72) Inventor: VERDE, Carlo, 80014 GIUGLIANO (NA) (IT)
(74) Representative: Torredimare, Luca

(57) **Abstract**

System for vertically adjusting a seat of a vehicle, in particular a motor vehicle, comprising: a base (2) adapted to be mounted to a floor of the vehicle; a seat structure (4), having a front part hinged to the base (2) ; a rocker arm (6), having a fulcrum (F), first and second arms (8, 10), wherein the rocker arm (6) is hinged to the base (2) at the fulcrum (F); a linear actuator (12) having a first end hinged to the base (2) and a second end hinged to the first arm (8) of the rocker arm (6); a connecting rod (14) having a first end hinged to the second arm (10) of the rocker arm (6) and a second end hinged to the rear part of the seat structure (4).

## Description

### Technical field

The present invention relates to a system for vertically adjusting a seat of a vehicle, in particular a motor vehicle.

### Technical background

Vehicle seats are notoriously equipped with a system allowing users to adjust the vertical position of the seat as desired, e.g. by acting upon a lever or a push-button that activates an electric motor dedicated to lifting/lowering the seat.

However, such systems suffer from a few drawbacks.

One drawback lies in the fact that the systems known in the art provide vertical movement of the seat while however causing also an excessive horizontal displacement of the seat. Therefore, when the user lifts or lowers the seat, the latter will also move forwards or backwards too much, thus requiring the user to make further adjustments to find the correct position in the vehicle.

### Summary of the invention

It is one object of the present invention to provide a system for vertically adjusting a seat of a vehicle which can overcome these and other drawbacks of the prior art.

A further object is to provide an adjustment system that can be manufactured in a simple and economical manner.

According to the present invention, these and other objects are achieved through a system for vertically adjusting a seat of a vehicle having the technical features set out in the appended independent claim.

It is understood that the appended claims are an integral part of the technical teachings provided in the following detailed description of the present invention. In particular, the appended dependent claims define some preferred embodiments of the present invention that include some optional technical features.

### Brief description of the drawings

Further features and advantages of the present invention will become apparent in light of the detailed description that follows, provided merely as a non-limiting example with particular reference to the annexed drawings, wherein:
- Figure 1 is a perspective view of a system in accordance with one embodiment of the present invention;
- Figure 2 illustrates the same system shown in Figure 1 without the seat structure;
- Figure 3 is a side view showing the embodiment of the invention illustrated in Figure 1 in a lowered condition;
- Figure 4 is a side view showing the embodiment of the invention illustrated in Figure 1 in a lifted condition;

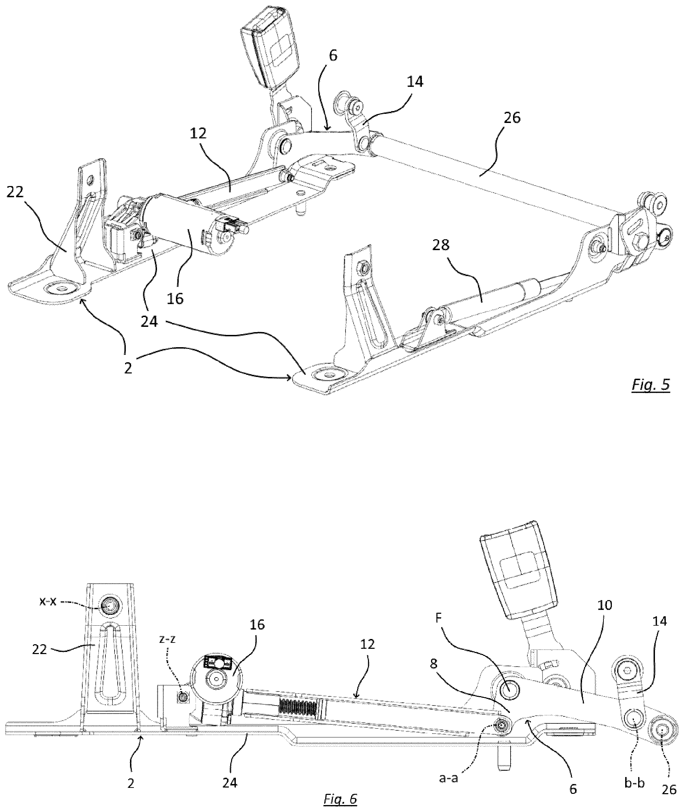

- Figure 5 is a further perspective view of the system of Figure 1 without the seat structure;
- Figure 6 is a side view of the system of the invention illustrated in Fig. 5 without the seat structure.

### Detailed description of the invention

With reference to the accompanying drawings, the following will describe a system for vertically adjusting a seat of a vehicle, in particular a motor vehicle, comprising:
- a base 2 adapted to be mounted to a floor of the vehicle,
- a seat structure 4, having a front part hinged to base 2 (in particular, about a first axis of rotation x-x),
- a rocker arm 6, having a fulcrum F, first and second arms 8, 10, wherein rocker arm 6 is hinged to base 2 (in particular, about a second axis of rotation y-y) at fulcrum F,
- a linear actuator 12, e.g. a jack, having a first end hinged to base 2 and a second end hinged to the first arm 8 of rocker arm 6,
- a connecting rod 14 having a first end hinged to second arm 10 of rocker arm 6 and a second end hinged to a rear part of seat structure 4.

In the example, the first end of linear actuator 12 is hinged to base 2 about a third axis of rotation z-z, and the second end of linear actuator 12 is hinged to the first arm 8 about a fourth axis of rotation a-a. Connecting rod 14 has its first end hinged to the second arm 10 about a fifth axis of rotation b-b, and its second end hinged to the rear part of seat structure 4 about a sixth axis of rotation c-c. In particular, the first x-x, second y-y, ..., sixth c-c axes of rotation are parallel to one another. In more detail, such axes of rotation are horizontal when the system is installed in a horizontally-lying vehicle.

In this non-limiting example, as will become apparent below, seat structure 4 is a lower portion of the seat, in particular a lower portion of a frame of the seat, whereon the user is intended to sit. In particular, a cushion or a padding (not shown) may be mounted on seat structure 4, whereon the user will sit.

Rocker arm 6 is mounted to base 2, at fulcrum F, with freedom of rotation. In particular, the first arm 8 of rocker arm 6 is shorter than the second arm 10 of rocker arm 6. In particular, the distance between fulcrum F and the point where rocker arm 6 is hinged to linear actuator 12 is shorter than the distance between fulcrum F and the point where rocker arm 6 is hinged to connecting rod 14. In other words, the distance between fulcrum F and the fourth axis of rotation a-a is shorter than the distance between fulcrum F and the fifth axis of rotation b-b. Conveniently, but not exclusively, the distance between fulcrum F and axis b-b is 3 to 4 times the distance between fulcrum F and axis a-a. In the example shown herein, connecting rod 14 is shorter than second arm 10 of rocker arm 6.

With reference to the example illustrated herein, fulcrum F of rocker arm 6 is closer to the rear part of seat structure 4 than to the front part of seat structure 4. Therefore, rocker arm 6 is mounted close to the rear part of the seat, on the right in the drawings. The front part of seat structure 4, and hence of the seat as a whole, is on the left.

In particular, first arm 8 is closer to the front part of seat structure 4 than second arm 10.

Preferably, the system comprises locking means to hold linear actuator 12 in one or more specific positions, thereby retaining seat structure 4. In particular, the locking means are adapted to keep linear actuator 12 at one or more specific lengths within the total travel of said linear actuator 12.

Preferably, the system comprises an electric motor 16 for driving linear actuator 12. Conveniently, control means are provided, such as buttons, for operating electric motor 16 in order to lift or lower the seat. In particular, linear actuator 12 comprises electric motor 16. Preferably, linear actuator 12 is an elongated element. Conveniently, linear actuator 12 is per se known.

In the preferred embodiment, the first and second arms 8, 10 of rocker arm 6 form an angle of approximately 90°. Therefore, rocker arm 6 is L-shaped. According to some possible embodiments, the angle between arms 8, 10 of rocker arm is 70° +/- 5°, 80° +/- 5°, 90° +/- 5°, 100° +/- 5°, or 110° +/- 5°.

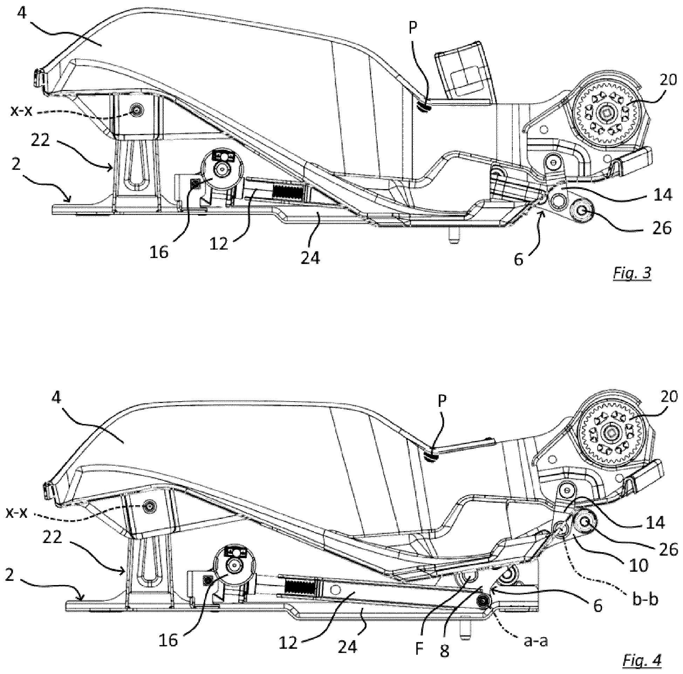

In the example, the first end of linear actuator 12 (i.e. the leftmost end in the drawings) is closer to the front part of seat structure 4 than to the rear part of seat structure 4. In particular, base 2, rocker arm 6 and connecting rod 14 are provided on both a right-hand side of seat structure 4 and a left-hand side of structure 4. Figures 3 and 4 show the left-hand side of seat structure 4. Therefore, seat structure 4 has the same mechanism symmetrically mounted on both its right-hand and left-hand sides. It follows that there are pairs of elements 2, 6, 14 mounted symmetrically on opposite sides (in particular, on the right-hand side and on the left-hand side) of seat structure 4. In the example, there are also a pair of brackets 22.

Preferably, the system comprises an elastic means 28 configured to act upon first arm 8 of rocker arm 6 in order to facilitate a rotation of rocker arm 6 for lifting seat structure 4. Therefore, elastic means 28 tends to rotate rocker arm 6 in that direction of rotation which causes seat structure 4 to rise. The force exerted by elastic means 28 limits the inflection between the actuated part (whereupon linear actuator 12 acts) and the driven part (whereupon elastic means 28 acts), while also reducing the force that electric motor 16 needs to exert in order to lift the seat. In particular, elastic means 28 is a spring, e.g. a gas spring. In the preferred embodiment shown herein, elastic means 28 has a first end hinged to base 2 and a second end hinged to first arm 8 of rocker arm 6. Preferably, elastic means 28 is an elongated element.

Preferably, on one side of seat structure 4 (e.g. the right-hand side) there is linear actuator 12 (and preferably also electric motor 16), while on another side of structure 4 (e.g. the left-hand side) there is elastic means 28. Linear actuator 12 and elastic means 28 are symmetrically mounted. The other parts of the system that are present on both sides of seat structure 4 (in particular, rocker arms 6, bases 2, and connecting rods 14) are also symmetrically mounted. Optionally, bases 2 are joined together to form a single piece.

In particular, the first end of elastic means 28 is hinged to base 2 about the third axis of rotation z-z, and the second end of elastic means 28 is hinged to first arm 8 about the fourth axis of rotation a-a.

According to some possible variants, there are pairs of elements 2, 6, 14 mounted on two opposite sides of seat structure 4, but there is just one linear actuator 12 (with, preferably, associated electric motor 16), and there is no elastic means 28. According to a further variant, there are pairs of elements 2, 6, 14 mounted on two opposite sides of seat structure 4, and there are also a pair of linear actuators 12 symmetrically mounted on both sides.

The seat includes a backrest (not shown), the inclination of which may be adjustable by means of a tilt adjustment system 20 (which may be per se known). The backrest is constrained, preferably in a rotatable manner via tilt adjustment system 20, to seat structure 4.

Preferably, the front part of seat structure 4 is hinged to base 2 in a raised portion of said base 2. In the example, base 2 comprises a bracket 22, which is conveniently arranged in a substantially vertical position, to which the front part of seat structure 4 is hinged. In more detail, base 2 comprises a bottom portion 24 adapted to be mounted parallel to the floor of the vehicle. Bottom portion 24 is substantially horizontal. Bracket 22 is substantially perpendicular to bottom portion 24. Therefore, the first axis of rotation x-x is elevated from the bottom portion, and hence from the floor of the vehicle.

In particular, seat structure 4 is configured to rotate relative to base 12 about the first axis of rotation x-x. Therefore, the seat is intended to rotate relative to base 12 about the first axis of rotation x-x.

Of course, the front part of seat structure 4 (on the left in the drawings) is that part which is closest to the legs of the user or driver. The rear part of seat structure 4 (on the right in the drawings) is that part which is closest to the backrest of the seat.

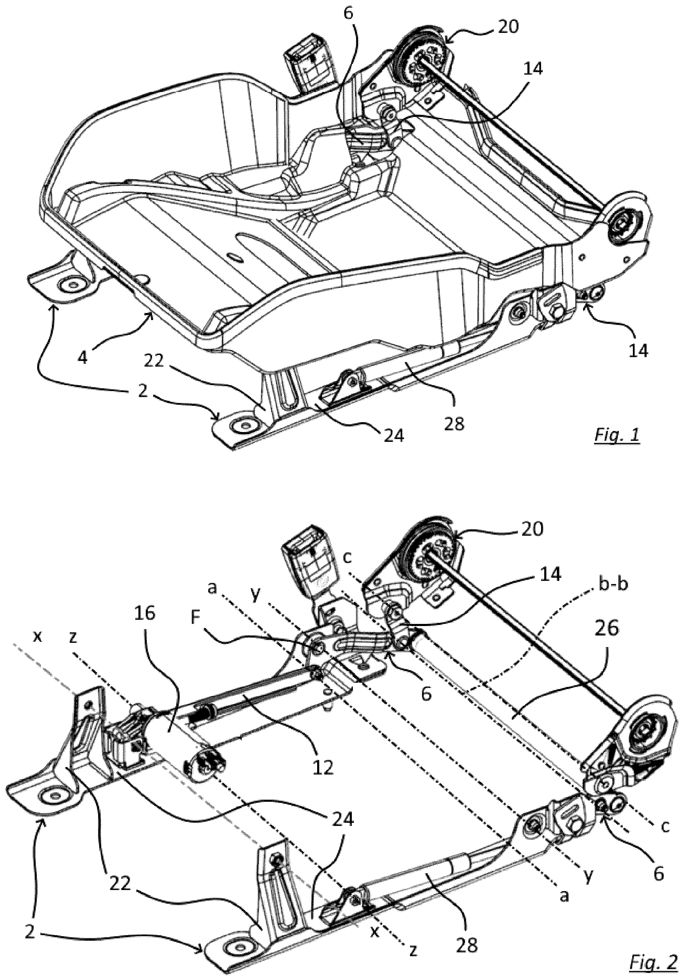

Preferably, the system comprises a bar 26 that mutually connects the two rockers 6 arranged on the right-hand and left-hand sides of seat structure 4. This improves the synchronism of the two lateral mechanisms. Conveniently, bar 26 is constrained to second arm 10 of each rocker arm 6, particularly to one end of second arm 10. In particular, bar 26 is parallel to second axis of rotation y-y. With reference to Figure 2, bar 26 is horizontal. In the example, the distance between fulcrum F and the point where bar 26 is hinged to second arm 10 of rocker arm 6 is longer than the distance between fulcrum F and the point where connecting rod 14 is hinged to second arm 10 of rocker arm 6. In other words, the distance between fulcrum F and the point where bar 26 is hinged to second arm 10 of rocker arm 6 is longer than the distance between fulcrum F and the fifth axis of rotation b-b.

Linear actuator 12 pushes second arm 10 of rocker arm 6, thus causing it to rotate (counterclockwise in the drawings) about the second axis of rotation y-y and, through connecting rod 14, push the rear part of seat structure 4, which is thus made to rotate (counterclockwise in the drawings) about first axis of rotation x-x.

The present invention provides, advantageously, a simple and low-cost lifting mechanism, which can lift and lower vertically the seat while at the same time minimizing any horizontal movement of said seat. It follows that the user can adjust the seat easily and quickly. As can be inferred by looking at Figures 3 and 4, which illustrate seat structure 4 in the fully lowered and fully lifted positions, the mechanism of the invention permits a rotation of seat structure 4 about the first axis of rotation x-x. In such figures, a point P is marked on seat structure 4, said point P being in particular located at the top of the seat structure at approximately one third of the length of seat structure 4 from the rear part thereof. It can be noticed that, between the lowered and lifted positions, point P moves almost only vertically, and the horizontal movement is negligible compared with the vertical movement.

Without any limitation whatsoever, the system is so configured that a vertical movement of seat structure 4 is about ten times greater than a horizontal movement of said seat structure 4. For example, when point P is lifted by 48 mm, said point P will move horizontally by approximately 4.8 mm.

The invention also concerns a seat for a vehicle, in particular for a motor vehicle, having a system according to any variant of the invention. The invention also concerns a vehicle, in particular a motor vehicle, having such system and a seat comprising such system.

Of course, without prejudice to the principle of the invention, the forms of embodiment and the implementation details may be extensively varied from those described and illustrated herein by way of non-limiting example, without however departing from the scope of the invention as set out in the appended claims.

Barzanò & Zanardo Milano S.p.A.

## Claims

1. System for vertically adjusting a seat of a vehicle, in particular a motor vehicle, comprising:
- a base (2) adapted to be mounted to a floor of the vehicle,
- a seat structure (4), having a front part hinged to the base (2),
- a rocker arm (6), having a fulcrum (F), first and second arms (8, 10), wherein the rocker arm (6) is hinged to the base (2) at the fulcrum (F),
- a linear actuator (12) having a first end hinged to the base (2) and a second end hinged to the first arm (8) of the rocker arm (6),
- a connecting rod (14) having a first end hinged to the second arm (10) of the rocker arm (6) and a second end hinged to a rear part of the seat structure (4).

2. System according to claim 1, wherein said system is so configured that, when the linear actuator (12) is operated, the vertical movement of the seat structure (4) is much greater than the horizontal movement of the seat structure (4) .

3. System according to claim 1 or 2, wherein the first arm (8) of the rocker arm (6) is shorter than the second arm (10) of the rocker arm (6).

4. System according to claim 3, wherein the distance between the fulcrum (F) and the point where the rocker arm (6) is hinged to the linear actuator (12) is shorter than the distance between the fulcrum (F) and the point where the rocker arm (6) is hinged to the connecting rod (14).

5. System according to any one of the preceding claims, wherein the connecting rod (14) is shorter than the second arm (10) of the rocker arm (6).

6. System according to any one of the preceding claims, wherein the fulcrum (F) of the rocker arm (6) is closer to the rear part of the seat structure (4) than to the front part of the seat structure (4).

7. System according to any one of the preceding claims, comprising an electric motor (16) for driving the linear actuator (12).

8. System according to any one of the preceding claims, wherein the first and second arms (8, 10) of the rocker arm (6) form an angle of approximately 90°.

9. System according to any one of the preceding claims, wherein the first end of the linear actuator (12) is closer to the front part of the seat structure (4) than to the rear part of the seat structure (4).

10. System according to any one of the preceding claims, wherein the base (2), the rocker arm (6), and the connecting rod (14) are present on both a right-hand side of the seat structure (4) and a left-hand side of the seat structure (4) .

11. System according to claim 10, comprising an elastic means (28) configured to act upon the first arm (8) of the rocker arm (6) in order to facilitate a rotation of the rocker arm (6) for lifting the seat structure (4).

12. System according to any one of the preceding claims, wherein the seat structure (4) is hinged to the base (12) about a first axis of rotation (x-x), and is configured to rotate relative to the base (2) about said first axis of rotation (x-x).

13. Seat for a vehicle, in particular a motor vehicle, having a system according to any one of the preceding claims.
Barzanò & Zanardo Milano S.p.A./LT
